# EUROPEAN PATENT APPLICATION

(11) **EP 1 838 042 A1**
(43) Date of publication of application: **26.09.2007**
(21) Application number: 06111457.5
(22) Date of filing: 21.03.2006
(51) Int. Cl.: H04L 12/28

(54) **Interactive data reception and transmission system**

(71) Applicant: Marco Srl, 16010 Savignone GE (IT)
(72) Inventor: Zipoli, Claudio, 16154, GENOVA (IT)
(74) Representative: Porsia, Attilio

(57) **Abstract**

Interactive data reception and transmission equipment, comprising a central station (2) connected by means of a wired network (1) to a link element (3) which is connected by means of a radio frequency transmission network (4) to a plurality of radio base stations or beacons (5) which receive and transmit data from and to this central station (2); each of these radio base stations (5) has a certain radius (R) of reception and transmission and communicates by means of a radio frequency system (14) with one or more portable interactive terminals (6) present in this radius (R) of reception and transmission and each of these portable interactive terminals (6) is capable of transmitting and receiving data and information to and from this radio base station or beacon (5).

## Description

The present invention relates to interactive data reception and transmission equipment.

As is known, a tourist or any member of the public wishing to acquire information about the services provided by a city, particularly a large city, has to use a multiplicity of structures and gather on his own initiative a large quantity of data, from guides, maps, timetables, calendars of events, and other material. He must also discover how to obtain first aid and public safety services, and in general all services of public interest. This data gathering, which can be carried out before arrival in a city, or while the person is in the city, inevitably leads to a large expenditure of energy and a considerable loss of time.

The object of the present invention is interactive data reception and transmission equipment which can be used to transmit to a tourist or to any member of the public, automatically or on request, a set of information and data in real time, such as logistical information (hotels, restaurants, public transport, etc.), special mobility and access services (museums, parking, public transport, etc.), cultural activities and suggestions on short- and long-term initiatives and events, information on works of art, museums, monuments, etc., tourist information on the most interesting areas, information of public interest (pharmacies, taxis, public safety, emergency services, etc.), and other information.

This object is achieved by the present invention by means of interactive data reception and transmission equipment characterized in that it comprises a central station connected by means of a wired network to a link element which is connected, by means of a radio frequency transmission network, to a plurality of radio base stations or beacons which receive and transmit data from and to this central station; each of these radio base stations has a certain radius of reception and transmission and communicates by means of a radio frequency system with one or more portable interactive terminals present in this radius of reception and transmission, and each of these portable interactive terminals is capable of transmitting and receiving data and information to and from this radio base station or beacon.

According to a further aspect of the present invention, this radio frequency system for connecting these radio base stations to each of these portable interactive terminals is of the Bluetooth® type.

Further characteristics and advantages of the present invention will be made clearer by the following description, to be interpreted as exemplary and without restrictive intent, and referring to the attached drawings, in which:
- Fig. 1 shows a schematic diagram of interactive data reception and transmission equipment according to the present invention, comprising a plurality of radio base stations communicating with portable interactive terminals, and
- Fig. 2 shows a perspective view of a preferred embodiment of one of the said portable interactive terminals of Fig. 1.

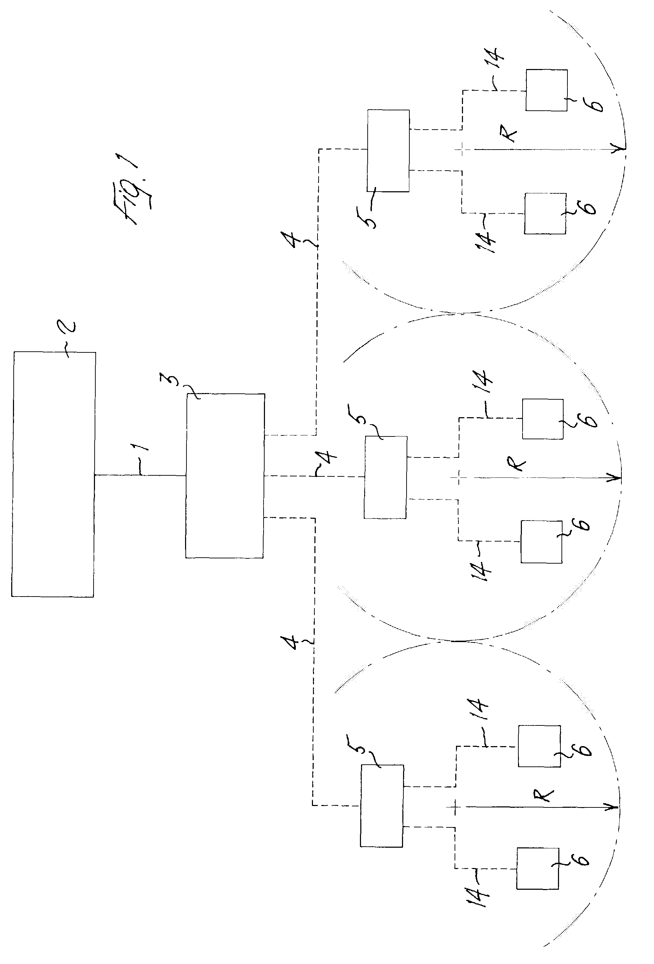

With reference to the attached drawings and with particular reference to Fig. 1 of the drawings, the number 1 indicates a wired network, for example an IP network, to which is connected, on the one hand, a central station 2 for controlling the data and services, which may contain, for example, an editorial facility, and, on the other hand, a link element or "access point" 3. Clearly there may be more than one access point 3, depending on the size of the present equipment. The said access point 3 is connected via a radio frequency transmission network 4 to a series, three in this case, of radio base stations or beacons 5. This radio frequency transmission network 4 is preferably of the WiFi (Wireless Fidelity) type. Each of these radio base stations 5 has a certain radius R of radio signal reception and transmission. Within this radius R of radio signal reception and transmission of each of the said radio base stations 5 there are shown, by way of example, two portable interactive terminals 6, for receiving and transmitting data from and to the radio base station 5. The system 14 for communication and for connection of these portable interactive terminals 6 to the radio base station 5 is of the radio frequency type and preferably of the Bluetooth® type.

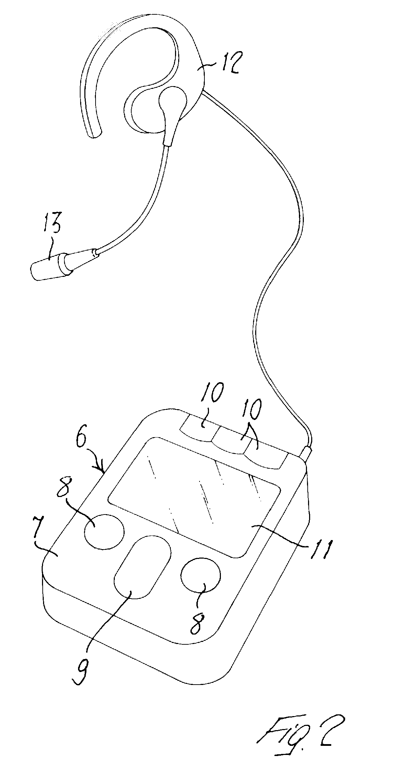

Fig. 2 shows one of the said portable interactive terminals 6 of Fig. 1. This terminal comprises a boxlike casing 7 provided with a first set of programming and data access keys 8, an on/off key 9 and a second set of keys 10 enabling the terminal to operate as a remote controller, for example to control door opening and closing systems, the switching on and off of residential or vehicular alarm systems, the opening of passageways, access to secure areas and other operations. Clearly, the devices which control, for example, these opening systems must be associated with a beacon 5 for communication with the said portable interactive terminal 6. This portable interactive terminal 6 is also provided with a screen 11 for the display of the data exchanged with the radio base station 5, and a headset 12, having a microphone 13, for listening to voice messages sent from the said radio base station 5 and for any voice communication with another portable interactive terminal 6 located within a certain radius of operation, for example 100-150 m. In the said terminal, it is also possible to fit a prepaid SIM (Subscriber Identity Module) card for small payments, for example in the case of public transport, car parks, museums and commercial enterprises. These public transport facilities, car parks, museums, etc., must contain a radio base station or beacon 5 which recognizes and communicates with the portable interactive terminal 6 held by the user. The said portable interactive terminal can also comprise a compass to show the precise orientation of the user. This compass can be displayed on the screen 11.

The present equipment can clearly be used for a multiplicity of applications. As stated, it can be used as a remote controller which retains in its memory the information about who has carried out a particular operation. The beacon or radio base station 5 keeps in its memory the information on the operation with data such as the time, date, etc., enabling various levels of authorization to be provided if necessary, according to the type of user. The stored data can be interrogated and/or uploaded to other fixed or mobile equipment, for example a portable computer. This characteristic, with the data stored in the beacon, makes it possible, in an innovative manner, to manage the dynamic development of businesses and/or sectors with ad hoc requirements for modular access and authorization.

Another application of the present equipment is its use in a large city as a system providing the user with tourist or public service information. Clearly, the user will be in possession of a portable interactive terminal 6, while a certain number of radio base stations 5 will be provided in the city, each having a specific radius R of reception and transmission, in such a way as to ensure total coverage of the territory. These radio base stations 5 will therefore be connected to the access points 3 and consequently to the IP network 1 and to the central data and services control station 2. When the portable interactive terminal 6 enters the area of a city containing radio base stations 5, it receives the information relating to it and thus becomes specialized in relation to the said type of area and therefore to the radio base station 5 within whose reception and transmission radius R it is located. For example, the terminal 6 can become a support system for logistics and for information on the area of the city in question, on the monuments present and on typical local services or events. The editing facility present in the central station 2 constantly updates the information to be sent to the radio base station 5, so that the user in possession of a terminal 6 will be aware, for example, of the events taking place in the city on the day in question, or on a specified date. The useful information communicated to the user entering a city can include, for example, information about hotels, restaurants, public services and other facilities.

On the other hand, if the portable interactive terminal 6 enters a closed area, such as a bank, a museum or an airport, it receives and becomes customized for the typical services of the area, the corresponding menus being displayed on the screen 11 and sent in the form of voice messages via the headset 12.

All the audio and video communications between the portable interactive terminal 6 and the radio base station 5 take place in the user's language, which is selected from those specified when the terminal 6 is switched on, and is retained until the terminal is switched off.

In all cases, in both open and closed areas, the equipment gives priority to the need for connection to personal assistance services, such as a request for aid or police assistance, cancelling any other communication of information which is in progress.

Another characteristic of the portable interactive terminal 6 is the possibility of storing the data received from the radio base station 5 in suitable memories, thus enabling the user to hear them again whenever he wishes. Furthermore, the said terminal 6 is capable of not receiving and communicating the same message more than once.

Additionally, the said portable interactive terminal 6 enables the user to speak directly to the operator of the editing facility of the central station 2, for example if the user finds himself in an emergency situation and has to contact the first aid or taxi service, call a breakdown service, or simply request further information.

## Claims

1. Interactive data reception and transmission equipment, **characterized in that** it comprises a central station (2) connected by means of a wired network (1) to a link element (3) which is connected, by means of a radio frequency transmission network (4), to a plurality of radio base stations or beacons (5) which receive and transmit data from and to the said central station (2), each of the said radio base stations (5) having a certain radius (R) of reception and transmission and communicating by means of a radio frequency system (14) with one or more portable interactive terminals (6) present in the said radius (R) of reception and transmission, and each of the said portable interactive terminals (6) being capable of transmitting and receiving data and information to and from the said radio base station or beacon (5).

2. Equipment according to Claim 1, **characterized in that** the said radio frequency system (14) for connecting the said radio base stations (5) to each of the said portable interactive terminals (6) is of the Bluetooth® type.

3. Equipment according to Claim 1, **characterized in that** the said radio frequency transmission network (4) for connecting the said link element (3) to the said radio base stations (5) is of the WiFi (Wireless Fidelity) type.

4. Equipment according to Claim 1, **characterized in that** the said central station (2) comprises an editing facility for sending the data of the radio base stations (5) in real time and updating them.

5. Equipment according to Claim 1, **characterized in that** the said portable interactive terminal (6) comprises a boxlike casing (7) provided with a set of keys (8, 9) for programming and data access.

6. Equipment according to Claim 1, **characterized in that** the said portable interactive terminal (6) comprises a screen (11) for the display of the data exchanged with another portable interactive terminal (6) or with the said radio base stations or beacons (5).

7. Equipment according to Claim 1, **characterized in that** the said portable interactive terminal (6) comprises a headset (12), provided with a microphone (13), for listening to and sending voice messages from and to the said radio base station (5) or for communicating with another portable interactive terminal (6) present within a certain radius of reception and transmission.

8. Equipment according to Claim 1, **characterized in that** the said portable interactive terminal (6) comprises a set of keys (10) enabling the terminal to operate as a remote controller.

9. Equipment according to Claim 1, **characterized in that** the said portable interactive terminal (6) comprises a prepaid SIM (Subscriber Identity Module) card.

10. Equipment according to Claim 1, **characterized in that** the said portable interactive terminal (6) comprises a compass for orientation, displayed on the said screen (11).

11. Equipment according to Claim 1, **characterized in that** the said portable interactive terminal (6) comprises means for storing the audio or video data sent and received from the said radio base stations or beacons (5).
